Europäisches Patentamt

European Patent Office

Office européen des brevets

(19)

(11) Numéro de publication: **0 110 946**
**B1**

(12) **FASCICULE DE BREVET EUROPEEN**

(45) Date de publication du fascicule du brevet:
**07.01.87**

(51) Int. Cl.⁴: **G 21 C 19/32**

(21) Numéro de dépôt: **83901818.1**

(22) Date de dépôt: **06.06.83**

(86) Numéro de dépôt international:
**PCT/FR 83/00110**

(87) Numéro de publication internationale:
**WO 83/04454 (22.12.83 Gazette 83/29)**

(54) **PROCEDE, INSTALLATION ET DISPOSITIF POUR LE COMPACTAGE D'OBJETS OBLONGS.**

(30) Priorité: **07.06.82 FR 8209859**

(43) Date de publication de la demande:
**20.06.84 Bulletin 84/25**

(45) Mention de la délivrance du brevet:
**07.01.87 Bulletin 87/2**

(84) Etats contractants désignés:
**AT BE CH DE GB LI LU NL SE**

(56) Documents cités:
**EP - A - 0 066 695**
**LU - A - 78 579**

(73) Titulaire: **SOCIETE POUR LES TRANSPORTS DE L'INDUSTRIE NUCLEAIRE TRANSNUCLEAIRE, 11, rue Christophe Colomb, F-75008 Paris (FR)**

(72) Inventeur: **FOUSSARD, Jean-François Jackie Antoine, 75, avenue du Maréchal Foch, F-95460 Ezanville (FR)**

(74) Mandataire: **Bonnetat, Christian et al, Cabinet PROPI Conseils 23 rue de Léningrad, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé, une installation et un dispositif pour le compactage d'objets oblongs et flexibles, notamment des crayons combustibles de réacteur nucléaire.

On sait que, dans les réacteurs nucléaires à uranium enrichi, la matière fissile est constituée par des pastilles d'oxyde d'uranium empilées dans des gaines métalliques fermées à chaque extrémité, pour former ce que l'on appelle les «crayons combustibles». Ceux-ci sont rassemblés en grand nombre (par exemple 264), avec un certain nombre de tubes ne renfermant pas de combustible, pour former un élément combustible. Les éléments combustibles sont disposés dans le réacteur pour former le cœur de celui-ci.

Une fois atteint le taux de combustion requis, les éléments combustibles irradiés sont sortis du réacteur et immergés plusieurs mois dans une piscine proche afin de refroidir et perdre la plus grande partie de leur radioactivité. Ensuite, ils sont évacués vers un site approprié et stockés d'une manière ou d'une autre (piscine, emballage de stockage, etc.) en attendant leur retraitement éventuel.

Pour le transport comme pour le stockage, il est intéressant, pour gagner de la place, de démanteler les éléments combustibles et de rassembler, de façon compacte, les crayons combustibles en bottes, c'est-à-dire en un ensemble plus ou moins compact d'objets ablongs, rectilignes et parallèles entre eux sur toute leur longueur. En effet, à l'intérieur d'un élément combustible, les crayons combustibles, qui présentent, par exemple, un diamètre extérieur de l'ordre de 9,5 mm, sont disposés en un réseau à mailles carrées de l'ordre de 12,6 mm de côté. Il en résulte une section de l'élément combustible voisine du double de celle correspondant à un réseau compact.

On conçoit que le démantèlement des éléments combustibles, et plus particulièrement par constitution de bottes de crayon et leur introduction dans des conteneurs appropriés, présente des difficultés du fait que ces crayons sont très longs (environ 4 m) par rapport à leur faible diamètre (9,5 mm).

Par la demande EP-A2-0066695 plus ancienne mais publié après la date de priorité de la présente demande, on connaît déjà un appareil permettant de compacter des crayons de combustible nucléaire comportant des moyens de réagencement en une configuration différente de celle dans laquelle lesdits crayons se trouvent dans les éléments combustibles et deux sortes de moyens de compactage suivant deux directions, orthogonales entre elles et transversales auxdits crayons.

La présente invention a pour objet un procédé, une installation et un dispositif permettant de compacter des objets de grande longueur et de faibles dimensions transversales en vue de les disposer de façon fiable, répétitive et rapide dans un conteneur, de sorte que la portion de la section de celui-ci occupée par les sections transversales desdits objets soit maximale. Elle s'applique tout particulièrement, quoique non exclusivement, à la manipulation et au compactage de crayons combustibles en vue de leur mise en conteneur, quel que soit le but de cette mise en conteneur (stockage définitif, stockage intermédiaire, transport, etc.).

A cette fin, l'invention a trait à un procédé pour compacter un faisceau d'objets oblongs et flexibles de faibles dimensions transversales, tels que des crayons combustibles pour réacteurs nucléaires, lesdits objets constituant antérieurement au compactage un ensemble dans lequel ils occupent des positions parallèles, transversalement espacées, selon la revendication 1.

Quoique lesdits tubes puissent être agencés selon toute direction générale désirée, il est avantageux, pour tirer partie de la gravité, que cette direction soit sensiblement verticale. Dans ce cas, les extrémités supérieures des tubes de guidage sont disposées en concordance avec la disposition initiale dudit ensemble d'objets et les extrémités inférieures desdits tubes sont disposées suivant la disposition désirée; et l'on amène verticalement ledit ensemble au-dessus de la pluralité des tubes de guidage et, après introduction desdits objets dans lesdits tubes, on laisse lesdits objets glisser vers le bas sous l'action de la pesanteur.

Ainsi, à la sortie de la pluralité des tubes, c'est-à-dire à leur partie inférieure, on obtient la disposition désirée des objets, qui peut être, soit plus compacte, soit moins compacte que la disposition initiale desdits objets.

Dans le cas du compactage, pour un diamètre minimum des tubes de guidage compatible avec un bon glissement des objets oblongs, le degré de compactage des objets, obtenu à la sortie de la pluralité des tubes, dépend de la disposition et de l'épaisseur de paroi desdits tubes à leur partie inférieure.

Si l'on vise à obtenir une disposition des objets oblongs en botte compacte, alors, selon l'invention, on donne à la pluralité des tubes de guidage la disposition la plus resserrée possible dans leur partie inférieure et l'on agence en aval de ceux-ci une pluralité d'éléments de guidage allongés et rigides dont les extrémités dirigées vers les tubes de guidage se trouvent en regard des interstices situés entre les extrémités resserrées de ceux-ci et dont les extrémités opposées se logent dans les interstices laissés libres entre lesdits objets, lorsque ceux-ci sont au contact les uns des autres.

Chacun desdits éléments de guidage peut être constitué d'un fil, l'ensemble des fils formant une sorte de cage convergente. En variante lesdits éléments peuvent être formés par une plaque épaisse ou une multitude de plaques superposées dans lesquelles sont menagés des trous de guidage, la matière restant entre lesdits trous constituant lesdits éléments de guidage. Ainsi, lesdits éléments de guidage permettent de compacter transversalement les objets au maximum.

Lorsque, le nombre des objets à compacter est très important, on peut opérer en plusieurs étapes. Dans ce cas, on choisit, pour le sous- ensemble des objets compactés simultanément et donc pour les extrémités d'introduction des tubes de guidage, une disposition telle que par quelques mouvements relatifs simples (translation, rotation, etc.) elle recouvre sans omission (et éventuellement sans duplication) la disposition de la totalité desdits objets. Une telle disposition peut être déterminée, entre autres, par les conditions d'encombrement des moyens de préhension des objets. Par exemple, à partir d'un élément combustible à 264 crayons, on peut former quatre bottes de 66 crayons chacune.

Pour mettre en œuvre le procédé selon l'invention, il est avantageux de prévoir un dispositif de compactage comportant une pluralité de tubes de guidage dont, d'un côté, les extrémités sont disposées en concordance avec la disposition initiale de l'ensemble d'objets à compacter et, de l'autre côté, les extrémités sont disposées suivant la disposition désirée, les dimensions desdits tubes de guidage étant telles que dans chacun d'eux peut glisser librement l'un desdits objets. De préférence, des deux côtés, les tubes sont rendus solidaires les uns des autres par l'intermédiaire de brides transversales percées de trous disposés respectivement en concordance avec les dispositions retenues pour les extrémités des tubes. Du côté aval, le plus étroit, ledit dispositif de compactage est prolongé par une pluralité d'éléments de guidage rigides solidaires de la bride correspondante et disposés de façon à être logés, du côté de ladite bride, dans les interstices situés entre les extrémités des tubes de guidage et, du côté opposé à la bride, dans les interstices laissés libres entre lesdits objets rassemblés en faisceau.

Dans le cas où lesdits éléments sont des fils, à leur extrémité opposée à la bride, les fils périphériques sont rendus solidaires d'une surface d'appui fermée reproduisant le contour de la section droite de faisceau à l'endroit le plus resserré.

Si, de plus, on désire introduire le faisceau d'objets dans un conteneur, on peut disposer ce conteneur en prolongement de la pluralité des tubes et des éléments de guidage, en aval de ceux-ci, puis faire glisser les objets à l'intérieur dudit conteneur. Cependant, cette façon de faire présente l'inconvénient de nécessiter un encombrement longitudinal important, puisqu'à un moment les objets se trouvent en prolongement de la pluralité de tubes et éléments de guidage qui se trouvent eux-mêmes en prolongement du conteneur. Dans certaines applications, notamment la mise en conteneur de crayons combustibles effectuée verticalement dans une piscine de refroidissement et de désactivation, il est impossible d'opérer ainsi, car alors les crayons combustibles se trouveraient à un certain moment trop proche de la surface de l'eau de la piscine. Dans un tel cas, selon une variante de la présente invention, on dispose, en aval de la pluralité des éléments de guidage et en prolongement de ceux-ci, un dispositif de réception provisoire des objets oblongs, ce dispositif étant extensible, rétractable et susceptible de maintenir lesdits objets en botte, on opère le transfert du faisceau d'objets de la pluralité des tubes de guidage au dispositif de réception provisoire, en éloignant ladite pluralité de tubes de guidage et en déployant progressivement ledit dispositif de réception provisoire vers les tubes de guidage, et on procède ensuite au transfert de la botte d'objets du dispositif de réception provisoire au conteneur en poussant celui-ci coaxialement à la dite botte, tout en rétractant progressivement ledit dispositif de réception provisoire.

Ainsi une installation avantageuse pour la mise en œuvre du procédé selon l'invention comporte une pluralité de tubes de guidage, disposés dans une direction générale verticale, dont les extrémités supérieures sont disposées en concordance avec la disposition initiale dudit ensemble d'objets, et dont les extrémités inférieures sont disposées suivant la disposition désirée, les dimensions desdits tubes de guidage étant telles que dans chacun d'eux peut glisser librement l'un desdits objets sous l'action de la pesanteur.

Si, de plus, l'installation est prévue pour le prélèvement dans un premier conteneur d'un ensemble d'objets occupant des positions parallèles, transversalement espacées, ainsi que pour la mise dans un second conteneur de la botte plus ou moins compacte obtenue à partir dudit ensemble, elle comporte alors des moyens de préhension et de manutention pour tirer par levage hors du premier conteneur, disposé verticalement, ledit ensemble d'objets, puis pour introduire les extrémités inférieures desdits objets dans les extrémités supérieures de ladite pluralité de tubes de guidage, ainsi que des moyens pour transférer ledit faisceau d'objets de la pluralité des tubes au second conteneur.

Les figures annexées feront bien comprendre comment l'invention peut être réalisée.

La fig. 1 montre en élévation un dispositif de compactage d'objets allongés conforme à l'invention;

la fig. 2 est une vue de dessus suivant la flèche II, de la bride supérieure du dispositif de la fig. 1;

la fig. 3 est une coupe partielle à travers la bride supérieure de la fig. 1;

la fig. 4 est une coupe suivant la ligne IV–IV de la fig. 1;

la fig. 5 est une vue en bout selon la flèche V de la fig. 1;

les fig. 6 à 9 illustrent la mise en œuvre de l'invention pour le compactage des crayons combustibles d'un réacteur nucléaire.

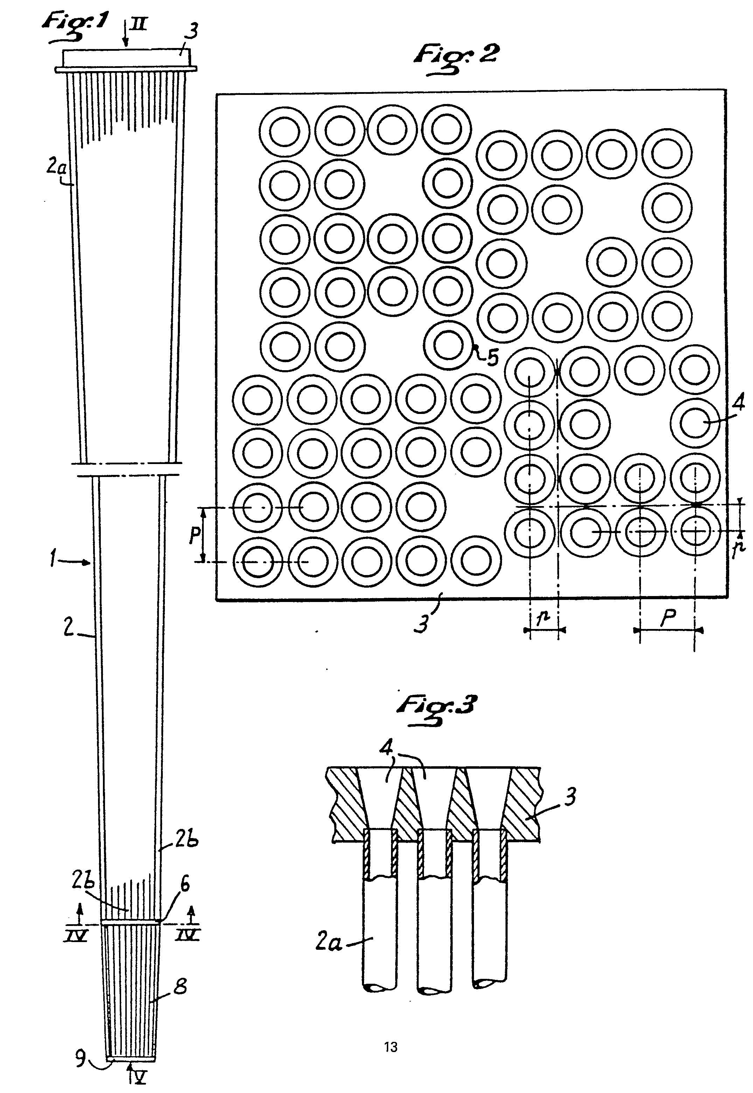

Sur les fig. 1 à 9 les références utilisées (de 1 à 21) ont partout la même signification. Sur ces figures, on a illustré l'invention à l'aide d'un exemple de réalisation particulier destiné au compactage des 264 crayons d'un élément combustible classique pour réacteur nucléaire. Dans cet élément combustible, les crayons sont répartis en un réseau de 17 lignes et 17 colonnes, à maille carrée de côté (ou pas) égal à $p = 12,6$ mm. En plus des 264 crayons, le réseau comporte 25 tubes sans combustible formant le squelette de l'élément combustible ($17 \times 17 = 264 + 25$).

Comme le montre la fig. 1, le dispositif de compactage 1 selon l'invention comporte une pluralité de tubes 2 (par exemple 66) écartés les uns des autres à leurs extrémités supérieures et au contact les uns des autres à leurs extrémités inférieures.

Les extrémités supérieures 2a des tubes sont rendues solidaires de la face inférieure d'une plaque épaisse ou bride 3, dont la surface est sensiblement égale à la section d'un élément combustible, dans laquelle sont percés des trous traversants 4, évasés vers l'extérieur, c'est-à-dire du côté opposé aux tubes 2 (voir les fig. 2 et 3). Il y a autant de trous 4 que de tubes 2 et chacun de ceux-ci est disposé dans le prolongement du trou correspondant, de sorte que ledit trou prolonge l'intérieur du tube. Dans la bride 3, les 66 trous 4 sont centrés en des points correspondant à des positions de crayons dans le réseau des 264 crayons de l'élément combustible, mais la distance séparant les centres de deux trous 4 voisins est au moins égale à P = 2p. Ainsi, il est possible de disposer de plus de place pour saisir lesdits crayons. De plus, la disposition relative des 66 trous 4 de la bride 3 est telle que si l'on faisait tourner la bride 3, de quatre quarts de tour successifs autour de son centre 5, les 66 trous 4 occuperaient les 264 emplacements des crayons de l'élément combustible. Ainsi, en prélevant dans l'élément combustible les crayons selon la répartition des trous 4 de la bride 3 et en faisant tourner ledit élément combustible autour de son axe longitudinal entre chaque prélèvement, on prélève la totalité des 264 crayons en quatre prélèvements, et à chaque prélèvement, les crayons sortis de l'élément combustible peuvent être introduits dans les trous 4 sans difficulté, puisqu'ils présentent la même disposition relative que ceux-ci.

Les extrémités inférieures 2b des tubes 2 sont rendues solidaires de la face supérieure d'une plaque ou bride 6, dans laquelle sont percés des trous 7. Il y a autant de trous 7 que de tubes 2 et chacun de ceux-ci est prolongé par l'un desdits trous. Comme le montre la fig. 4, chaque trou 7 (sauf sur les bords) est entouré par six trous 7 qui lui sont adjacents. Ainsi, les tubes 2 passent d'une disposition espacée à maille carrée (au niveau de la bride 3) à une disposition serrée à maille hexagonale (au niveau de la bride 6).

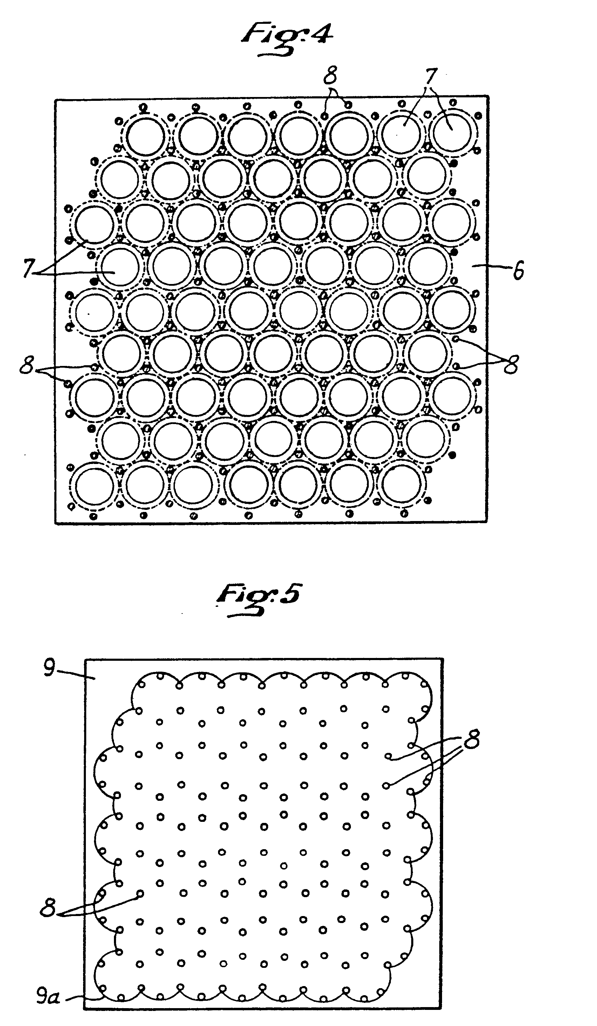

De plus, des fils rigides 8 sont fixés à la face inférieure de la bride 6, dans les interstices situés entre les extrémités 2b des tubes 2, pour prolonger de façon la plus immatérielle possible lesdits tubes en convergeant les uns vers les autres jusqu'à définir le contour extérieur de chacun des crayons combustibles. A leurs extrémités opposées à la bride 6, les fils 8 sont protégés par une plaque 9 (voir la fig. 5) à l'intérieur de laquelle est pratiquée une découpe 9a correspondant à la section d'une botte compacte de 66 crayons. Les extrémités des fils 8 périphériques sont rendues solidaires de la plaque 9, les autres se trouvant à l'intérieur de la découpe 9a.

Ainsi, on conçoit aisément que 66 crayons introduits simultanément dans les trous 4 de la bride 3 soient guidés par les tubes 2, les trous 7, puis les fils 8 et la plaque 9 pour former un faisceau qui présente à l'endroit le plus resserré une section telle qu'elle rende possible son introduction dans un conteneur de section minimum.

Bien entendu, le degré de compactage obtenu en aval de la bride 6 dépend du diamètre extérieur, donc de l'épaisseur de paroi, des tubes 2 à leur extrémité inférieure 2b. Les fils rigides 8 permettent de parfaire le compactage.

Le gradient de compactage, et donc la longueur des tubes 2, dépendent de la flexibilité des crayons et du jeu entre le diamètre intérieur des tubes 2 et les crayons. L'expérience a montré que, pour des crayons classiques de 4 m de longueur et de 9,5 mm de diamètre, des tubes d'une longueur de 2, 5 à 3 m et de 10,5 mm de diamètre intérieur prolongés par des fils d'environ 0,5 m de longueur donnaient de bons résultats.

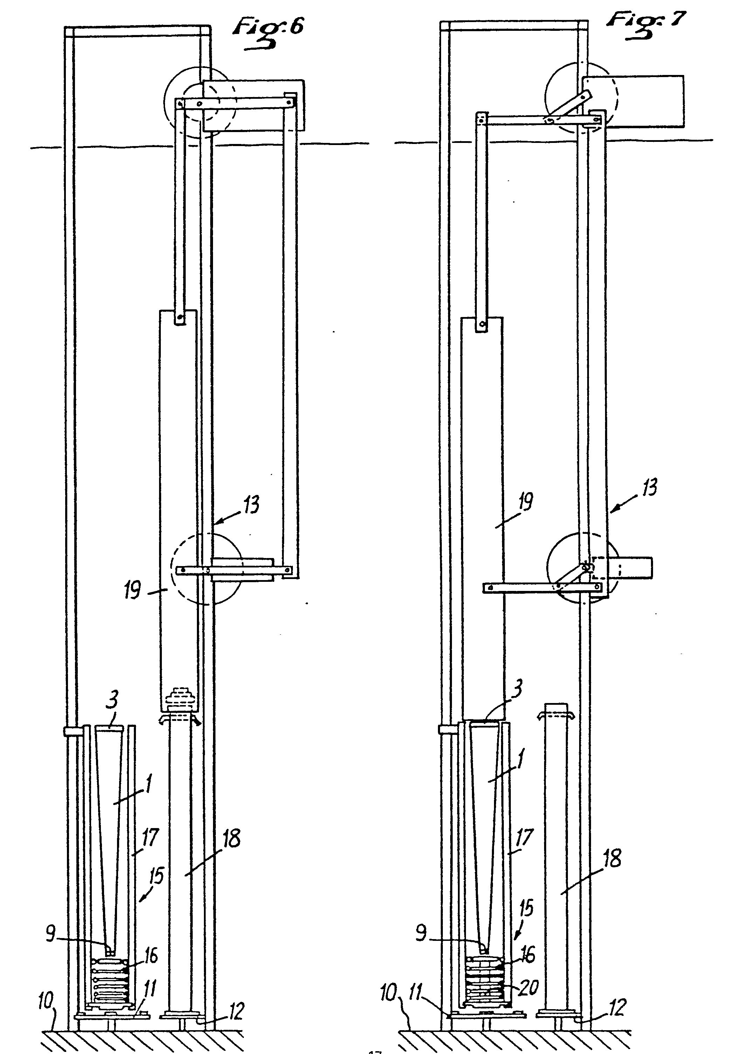

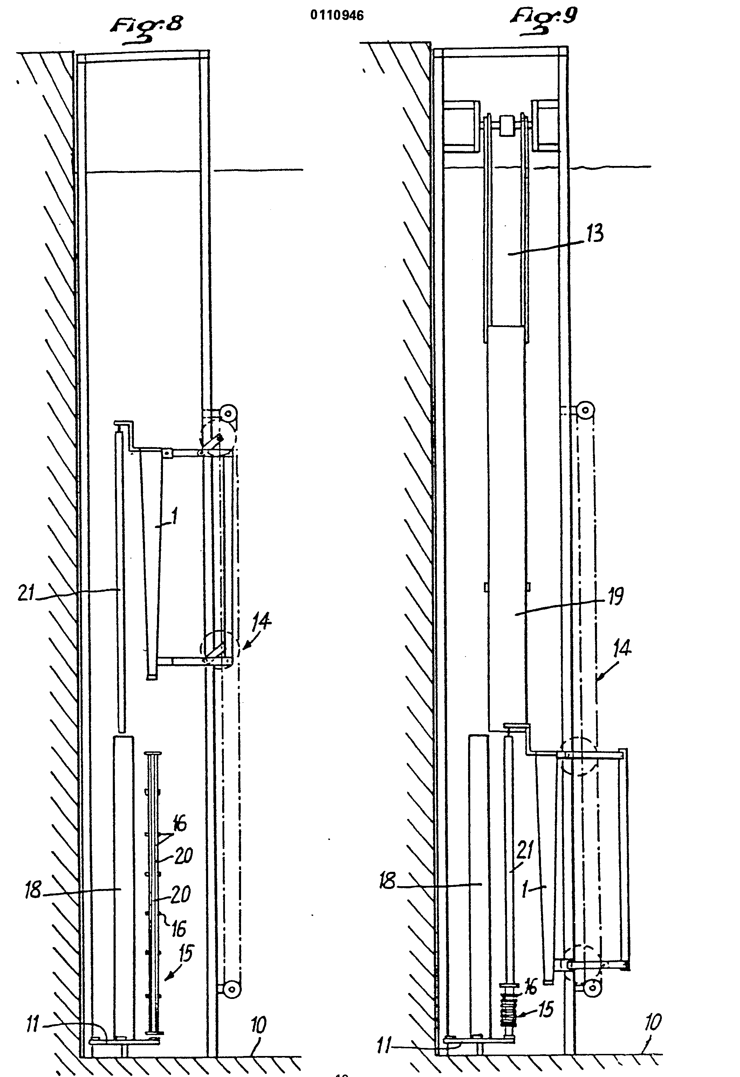

Les fig. 6 à 9 illustrent schématiquement une application du procédé selon l'invention, les fig. 8 et 9 représentant une vue à 90° par rapport à celle des fig. 6 et 7.

Sur le fond 10 d'une piscine de refroidissement et de désactivation sont disposés des plateaux-supports horizontaux 11 et 12 pouvant tourner autour de leur axe vertical et des mécanismes de manutention 13 et 14.

A l'aplomb du dispositif de compactage 1 est monté un dispositif de réception intermédiaire 15, à l'intérieur duquel peut pénétrer le dispositif 1, déplacé par le mécanisme 14 (représenté sur les fig. 8 et 9). Ce dispositif de réception intermédiaire 15 comporte une pluralité de plaques 16 parallèles les unes aux autres et identiques à la plaque 9 du dispositif 1. Les différentes plaques 16 peuvent se déplacer verticalement, en restant horizontales, le long de rails verticaux 17. Dans la position représentée sur les fig. 6 et 7, le dispositif de compactage 1 se trouve entre les rails 17 et les plaques 16 sont dans leur position basse.

Par ailleurs, sur le plateau tournant 12 est centré verticalement un élément combustible 18. Le mécanisme 13 (représenté sur les fig. 6 et 7) permet de manœuvrer un dispositif d'extraction 19 des crayons 20 de l'élément combustible 18.

Le dispositif 19 est amené par le mécanisme 13 au-dessus de l'élément 18 et prélève dans celui-ci 66 crayons répartis conformément à la fig. 2 (voir la fig. 6). Ensuite le mécanisme 13 déplace le dispositif 19 pour l'amener à l'aplomb du dispositif 1. Les 66 crayons descendent verticalement et, après avoir traversé le dispositif 1 par l'action de la pesanteur, ils se trouvent compactés et sont libérés. Le faisceau des crayons 20 à la sortie du dispositif 1 traverse les différentes plaques 16 rassemblées (voir la fig. 7). Le mécanisme 14 est alors actionné pour élever le dispositif 1, afin de le sortir d'entre les rails 17, tandis que les plaques 16 sont également manœuvrées de telle sorte que, coulissant vers le haut, elles s'écartent les unes des autres. Ainsi, le dispositif 1 libère les crayons 20 qui sont toutefois maintenus compactés par les plaques espacées 16 (voir la fig. 8). Enfin, le mécanisme 14 amène à l'aplomb de la botte de crayons contenue dans le dispositif de réception intermédiaire 15, un conteneur 21 qui est abaissé de façon que les crayons 20 compactés passent dans ledit conteneur 21 (voir la fig. 9).

Après ces opérations, on a donc mis en conteneur le quart des crayons contenus dans l'élément combustible 18. En recommençant quatre fois l'opération après rotation des plateaux 11 et 12 (le plateau 11 portant trois autres conteneurs 21 non représentés sur les figures), on met en conteneur la totalité des crayons de l'élément 18.

**Revendications pour les Etats contractants: CH, DE, GB, LI, NL et SE**

1. Procédé pour compacter un faisceau d'objets oblongs et flexibles de faibles dimensions transversales, tels que des crayons combustibles pour réacteur nucléaire, lesdits objets constituant antérieurement au compactage un ensemble dans lequel ils occupent les positions parallèles, transversalement espacées, caractérisé:
— en ce que l'on agence, sensiblement parallèlement à une même direction générale verticale, une pluralité de tubes de guidage (2), dont, d'un premier côté, les extrémités supérieures (2a) sont disposées en concordance avec la disposition initiale dudit ensemble d'objets, et dont, du second côté, les extrémités inférieures (2b) sont disposées suivant la disposition désirée, les dimensions desdits tubes de guidage (2) étant telles que dans chacun d'eux peut glisser librement l'un desdits objets;
— en ce que l'on amène ledit ensemble d'objets au-dessus de la pluralité des tubes de guidage;
— en ce que l'on introduit une extrémité de chaque objet dans l'une des extrémités supérieures (2a) desdits tubes de guidage (2);
— en ce que l'on permet à l'ensemble desdits objets de glisser vers les extrémités inférieures (2b) desdits tubes de guidage en s'aidant de l'action de la pesanteur;
— et en ce que l'on agence, en aval du faisceau des tubes de guidage (2), une pluralité d'éléments de guidage (8) rigides et convergents, dont les extrémités dirigées vers les tubes de guidage (2) se trouvent en regard des interstices situés entre les extrémités (2b) desdits tubes de guidage (2), et dont les extrémités opposées se logent dans les interstices laissés libres entre lesdits objets, lorsque ceux-ci sont en faisceau.

2. Procédé selon la revendication 1 dans le cas où l'ensemble desdits objets destinés à former une botte ne représente qu'une partie de la totalité de ces objets, caractérisé en ce que l'on choisit pour l'ensemble partiel des objets compactés simultanément, et donc pour les extrémités d'introduction des tubes de guidage, une disposition telle que, par quelques mouvemens relatifs simples, elle peut recouvrir sans omission la disposition initiale de la totalité desdits objets.

3. Procédé selon l'une quelconque des revendications 1 ou 2, appliqué à l'introduction du faisceau d'objets dans un conteneur (21) de section transversale à peine plus grande que la section transversale la plus petite dudit faisceau, caractérisé:

— en ce que l'on dispose, en aval de la pluralité de tubes de guidage (2) et dans le prolongement de ceux-ci, un dispositif (15) de réception provisoire desdits objets, ce dispositif (15) étant extensible, rétractable et susceptible de maintenir lesdits objets en botte;
— en ce que l'on opère progressivement le transfert du faisceau d'objets de la pluralité des tubes de guidage (2) au dispositif (15) en remontant ladite pluralité des tubes de guidage (2) tout en déployant progressivement ledit dispositif de réception provisoire (15);
— et en ce que l'on procède ensuite au transfert de la botte d'objets du dispositif de réception provisoire (15) au conteneur (21) en poussant celui-ci coaxialement à ladite botte tout en rétractant progressivement ledit dispositif de réception provisoire (15).

4. Dispositif de compactage pour la mise en œuvre d'un procédé spécifié sous l'une quelconque des revendications 1 à 3 afin de compacter un faisceau d'objets oblongs et flexibles de faibles dimensions transversales, tels que des crayons combustibles pour réacteur nucléaire, lesdits objets constituant antérieurement au compactage un ensemble dans lequel ils occupent des positions parallèles, transversalement espacées, caractérisé en ce qu'il comporte une pluralité de tubes de guidage verticaux (2) dont, d'un côté, les extrémités supérieures (2a) sont disposées en concordance avec la disposition initiale de l'ensemble d'objets à compacter et, de l'autre côté, les extrémités inférieures (2b) sont disposées suivant la disposition désirée, les dimensions desdits tubes de guidage (2) étant telles que dans chacun d'eux peut glisser l'un desdits objets et en ce que, à leurs extrémités, les tubes de guidage (2) sont rendus solidaires les uns des autres par l'intermédiaire de brides transversales (3, 6) percées de trous (4, 7), distribués selon lesdites dispositions.

5. Dispositif de compactage selon la revendication 4, caractérisé:
— en ce que, au delà de la bride (6) la plus compacte, il est prolongé par une pluralité d'éléments de guidage rigides convergents (8), disposés de façon à être, du côté des tubes (2) en regard des interstices situés entre les extrémités (2b) de ceux-ci et, du côté opposé, dans les interstices laissés libres entre lesdits objets rassemblés en faisceau,
— et en ce que les éléments de guidage, à leur extrémité opposée aux tubes de guidage reproduisent le contour de la section droite du faisceau d'objets à l'endroit où ils ont la disposition désirée.

6. Installation de compactage, pour la mise en œuvre d'un procédé spécifié sous l'une quelconque des revendications 1 à 3 afin de compacter un faisceau d'objets oblongs et flexibles de faibles dimensions transversales, tels que des crayons combustibles pour réacteur nucléaire, lesdits objets constituant antérieurement au compactage un ensemble dans lequel ils occupent des positions parallèles, transversalement espacées caractérisée:

en ce qu'elle comporte une pluralité de tubes de guidage (2), orientés selon une direction générale verticale, dont les extrémités supérieures (2a) sont disposées en concordance avec la disposition initiale dudit ensemble d'objets, et dont les extrémités inférieures (2b) sont disposées suivant la disposition désirée, les dimensions desdits tubes de guidage (2) étant telles que dans chacun d'eux peut glisser l'un desdits objets, le glissement étant favorisé par l'action de la pesanteur;

— en ce qu'elle comporte des moyens mécaniques de manutention pour assurer le déplacement relatif des objets par rapport auxdits tubes de guidage (2); et

— en ce qu'elle comporte un dispositif (15), extensible et rétractable, susceptible de maintenir ledit ensemble d'objets en botte, ce dispositif recevant provisoirement lesdits objets avant leur introduction dans le second conteneur (21).

**Revendications pour les Etats contractants: AT, BE et LU**

1. Procédé pour compacter un faisceau d'objets oblongs et flexibles de faibles dimensions transversales, tels que des crayons combustibles pour réacteur nucléaire, lesdits objets constituant antérieurement au compactage un ensemble dans lequel ils occupent les positions parallèles, transversalement espacées, caractérisé:

— en ce que l'on agence, sensiblement parallèlement à une même direction générale, une pluralité de tubes de guidage (2), dont, d'un premier côté, les extrémités (2a) sont disposées en concordance avec la disposition initiale dudit ensemble d'objets, et dont, du second côté, les extrémités (2b) sont disposées suivant la disposition désirée, les dimensions desdits tubes de guidage (2) étant telles que dans chacun d'eux peut glisser librement l'un desdits objets;

— en ce que l'on introduit une extrémité de chaque objet dans l'une des extrémités (2a) dudit premier côté desdits tubes de guidage (2);

— en ce que l'on permet à l'ensemble desdits objets de glisser vers les extrémités (2b) dudit seconde côté désdits tubes de guidage.

2. Procédé selon la revendication 1, caractérisé:
— en ce que ladite direction générale de guidage est la verticale,

— en ce que l'on amène ledit ensemble d'objets au-dessus de la pluralité des tubes de guidage,

— et en ce que, après introduction desdits objets dans lesdits tubes, on fait glisser lesdits objets vers le bas en s'aidant de l'action de la pesanteur.

3. Procédé selon l'une quelconque des revendications 1 ou 2, caractérisé en ce que l'on agence, en aval du faisceau des tubes de guidage (2) une pluralité d'éléments de guidage (8) rigides et convergents, dont les extrémités dirigées vers les tubes de guidage (2) se trouvent en regard des interstices situés entre les extrémités (2b) dudit second côté desdits tubes de guidage (2), et dont les extrémités opposées se logent dans les interstices laissés libres entre lesdits objets, lorsque ceux-ci sont en faisceau.

4. Procédé selon l'une quelconque des revendications 1 à 3 dans le cas où l'ensemble desdits objets destinés à former une botte ne représente qu'une partie de la totalité de ces objets, caractérisé en ce que l'on choisit pour l'ensemble partiel des objets compactés simultanément, et donc pour les extrémités d'introduction des tubes de guidage, une disposition telle que, par quelques mouvements relatifs simples, elle peut recouvrir sans omission la disposition initiale de la totalité desdits objets.

5. Procédé selon l'une quelconque des revendications 1 à 4 appliqué à l'introduction du faisceau d'objets dans un conteneur (21) de section transversale à peine plus grande que la section transversale la plus petite dudit faisceau, caractérisé:

— en ce que l'on dispose, en aval de la pluralité de tubes de guidage (2) et dans le prolongement de ceux-ci, un dispositif (15) de réception provisoire desdits objets, ce dispositif (15) étant extensible, rétractable et susceptible de maintenir lesdits objets en botte,

— en ce que l'on opère progressivement le transfert du faisceau d'objets de la pluralité des tubes de guidage (2) au dispositif (15) en remontant ladite pluralité des tubes de guidage (2) tout en déployant progressivement ledit dispositif de réception provisoire (15),

— et en ce que l'on procède ensuite au transfert de la botte d'objets du dispositif de réception provisoire (15) au conteneur (21) en poussant celui-ci coaxialement à ladite botte tout en rétractant progressivement ledit dispositif de réception provisoire (15).

6. Dispositif de compactage pour la mise en œuvre d'un procédé spécifié sous l'une quelconque des revendications 1 à 5 afin de compacter un faisceau d'objets oblongs et flexibles de faibles dimensions transversales, tels que des crayons combustibles pour réacteur nucléaire, lesdits objets constituant antérieurement au compactage un ensemble dans lequel ils occupent des positions parallèles, transversalement espacées, caractérisé en ce qu'il comporte une pluralité de tubes de guidage (2) dont, d'un côté, les extrémités (2a) dudit premier côté sont disposées en concordance avec la disposition initiale de l'ensemble d'objets à compacter et, de l'autre côté, les extrémités (2b) dudit second côté sont disposées suivant la disposition désirée, les dimensions desdits tubes de guidage (2) etant telles que dans chacun d'eux peut glisser l'un desdits objets.

7. Dispositif de compactage selon la revendication 6, caractérisé en ce que, à leurs extrémités, les tubes de guidage (2) sont rendus solidaires les uns des autres par l'intermédiaire de brides transversales (3, 6) percées de trous (4, 7) distribués selon les dispositions définies dans la revendication 6 et qui peuvent présenter, l'une par rapport à l'autre, des différences notables.

8. Dispositif de compactage selon l'une quelconque des revendications 6 ou 7, caractérisé:
— en ce que, au delà de la bride (6) la plus compacte, il est prolongé par une pluralité d'éléments de guidage rigides convergents (8), disposés de façon à être, du côté des tubes (2) en regard des interstices situés entre les extrémités (2b) du second côté de ceux-ci et, du côté opposé, dans les interstices laissés libres entre lesdits objets rassemblés en faisceau,

– et en ce que les éléments de guidage, à leur extrémité opposée aux tubes de guidage reproduisent le contour de la section droite du faisceau d'objets à l'endroit où ils ont la disposition désirée.

9. Installation de compactage, pour la mise en œuvre d'un procédé spécifié sous l'une quelconque des revendications 1 à 5 afin de compacter un faisceau d'objets oblongs et flexibles de faibles dimensions transversales, tels que des crayons combustibles pour réacteur nucléaire, lesdits objets constituant antérieurement au compactage un ensemble dans lequel ils occupent des positions parallèles, transversalement espacées caractérisé:

en ce qu'elle comporte une pluralité de tubes de guidage (2), orientés selon une direction générale verticale, dont les extrémités supérieures (2a) sont disposées en concordance avec la disposition initiale dudit ensemble d'objets, et dont les extrémités inférieures (2b) sont disposées suivant la disposition désirée, les dimensions desdits tubes de guidage (2) étant telles que dans chacun d'eux peut glisser l'un desdits objets, le glissement étant favorisé par l'action de la pesanteur;

– et en ce qu'elle comporte des moyens mécaniques de manutention pour assurer le déplacement relatif des objets par rapport auxdits tubes de guidage (2).

10. Installation selon la revendication 11, caractérisée en ce qu'elle comporte un dispositif (15), extensible et rétractable, susceptible de maintenir ledit ensemble d'objets en botte, ce dispositif recevant provisoirement lesdits objets avant leur introduction dans le second conteneur (21).

### Claims for contracting states: AT, BE and LU

1. Process for compacting a bundle of flexible oblong objects of small transverse dimensions, such as fuel pencils for nuclear reactor, said objects constituting, prior to compacting, an assembly in which they occupy parallel, transversely spaced apart positions, characterized:

– in that one arranges a plurality of guiding tubes (2) substantially parallel to the same general direction, of which tubes, on one side, the ends (2a) are disposed in register with the initial arrangement of said assembly of objects and of which, on the other side, the ends (2b) are disposed in accordance with the desired arrangement, the dimensions of said guiding tubes (2) being such that one of said objects may freely slide in each of them,

– in that one introduces one end of each object in one of the ends (2a) of said one side of said guiding tubes (2), and

– in that one allows all of said objects to slide toward the ends (2b) of said other side of said guiding tubes.

2. Process according to claim 1, characterized:

– in that said general guiding direction is vertical,

– in that one disposes said assembly of objects above the plurality of guiding tubes,

– and in that, after introducing said objects in said tubes, one makes slide said objects downwardly with the help of the gravity.

3. Process according to any one of claims 1 or 2, characterized in that one arranges downstream of the bundle of the guiding tubes (2), a plurality of convergent, rigid elements (8) whose ends directed towards the guiding tubes (2) are facing the interstices between the ends (2b) of said other side of said guiding tubes (2) and whose opposite ends are housed in the interstices left free between said objects, when the latter are in a bundle.

4. Process according to any one of claims 1 to 3, in the case of the assembly of said objects adapted to form a bundle representing only a part of the totality of these objects, characterized in that an arrangement is chosen for the partial assembly of the objects compacted simultaneously and therefore for the ends for introduction of the guiding tubes, such that, by a few simple relative movements, it may cover without omission the initial arrangement of the totality of said objects.

5. Process according to any one of claims 1 to 4, applied to the introduction of the bundle of objects in a container (21) whose transverse section is slightly larger than the smallest transverse section of said bundle, characterized in that:

– downstream of the plurality of guiding tubes (2) and in line therewith, there is disposed a device (15) for temporarily receiving said objects, this device (15) being extensible, retractable and adapted to maintain said objects in a bundle,

– the bundle of objects is progressively transferred from the plurality of guiding tubes (2) to the device (15) by raising said plurality of guiding tubes (2), whilst progressively extending said temporary receiving device (15),

– and the bundle of objects is then transferred from the temporary receiving device (15) to the container (21) by pushing the latter coaxially to said bundle whilst progressively retracting said temporary receiving device (15).

6. Compacting device for carrying out a process according to any one of claims 1 to 5 for compacting a bundle of flexible, oblong objects of small transverse dimensions, such as fuel pencils for nuclear reactor, said objects constituting, prior to compacting, an assembly in which they occupy parallel, transversely spaced apart positions, characterized in that said device comprises a plurality of guiding tubes (2) of which, on one side, the ends (2a) of said first side are disposed in register with the initial arrangement of the assembly of objecs to be compacted and, on the other side, the ends (2b) of said second side are disposed in the desired arrangement, the dimensions of said guiding tubes (2) being such that one of said objects may slide in each of them.

7. Compacting device according to claim 6, characterized in that, at their ends, the guiding tubes (2) are rendered fast with one another via transverse flanges (3, 6) pierced with holes (4, 7), distributed according to the arrangements defined in claim 6 and which can show, one from another, notable differences.

8. Compacting device according to any one of claims 6 or 7, characterized in that, beyond the most compact flange (6), it is extended by a plurality of convergent, rigid guiding elements (8) disposed so as, on the tube side, to face the interstices between the ends (2b) of said second side thereof, and, on the opposite side, to be in the interstices left free between said objects assembled in a bundle, and in that the guiding elements, at their end opposite the guiding tubes, reproduce the contour of the cross section of the bundle of objects at the spot where they have the desired arrangement.

9. Compacting installation for carrying out the process according to any one of claims 1 to 5 to compact a bundle of flexible, oblong objects of small transverse dimensions, such as fuel pencils for nuclear reactor, said objects constituting, prior to compacting, an assembly in which they occupy parallel, transversely spaced apart positions, characterized:
– in that it comprises a plurality of guiding tubes (2) oriented in a general vertical direction, of which the upper ends (2a) are disposed in register with the initial arrangement of said assembly of objects, and of which the lower ends (2b) are disposed in the desired arrangement, the dimensions of said guiding tubes (2) being such that one of said objects may slide in each of them, such sliding being promoted by the action of gravity,
– in that it comprises mechanical handling means for ensuring the relative displacement of the objects with respect to said guiding tubes (2).

10. Installation according to claim 9, characterized in that it comprises an extensible and retractable device (15) adapted to maintain said assembly of objects in a bundle, thus device temporarily receiving said objects before they are introduced into the second container (21).

**Claims for contracting states: CH, DE, GB, LI, NL and SE**

1. Process for compacting a bundle of flexible oblong objects of small transverse dimensions, such as fuel pencils for nuclear reactor, said objects constituting, prior to compacting, an assembly in which they occupy parallel, transversely spaced apart positions, characterized:
– in that one arranges a plurality of guiding tubes (2) substantially parallel to the same general vertical direction, of which tubes, on one side, the upper ends (2a) are disposed in register with the initial arrangement of said assembly of objects and of which, on the other side, the lower ends (2b) are disposed in accordance with the desired arrangement, the dimensions of said guiding tubes (2) being such that one of said objects may freely slide in each of them,
– in that one disposes said assembly of objects above the plurality of guiding tubes;
– in that one introduces one end of each object in one of the upper ends (2a) of said guiding tubes (2),
– in that one allows all of said objects to slide toward the lower ends (2b) of said guiding tubes, with the help of the gravity;
– and in that one arranges downstream of the bundle of the guiding tubes (2), a plurality of convergent, rigid elements (8) whose ends directed towards the guiding tubes (2) are facing the interstices between the ends (2b) of said guiding tubes (2) and whose opposite ends are housed in the interstices left free between said objects, when the latter are in a bundle.

2. Process according to claim 1, in the case of the assembly of said objects adapted to form a bundle representing only a part of the totality of these objects, characterized in that an arrangement is chosen for the partial assembly of the objects compacted simultaneously and therefore for the ends for introduction of the guiding tubes, such that, by a few simple relative movements, it may cover without omission the initial arrangement of the totality of said objects.

3. Process according to any one of claims 1 or 2, applied to the introduction of the bundle of objects in a container (21) whose transverse section is slightly larger than the smallest transverse section of said bundle, characterized in that:
– downstream of the plurality of guiding tubes (2) and in line therewith, there is disposed a device (15) for temporarily receiving said objects, this device (15) being extensible, retractable and adapted to maintain said objects in a bundle,
– the bundle of objects is progressively transferred from the plurality of guiding tubes (2) to the receiving device (15) by raising said plurality of guiding tubes (2), whilst progressively extending said temporary receiving device (15),
– and the bundle of objects is then transferred from the temporary receiving device (15) to the container (21) by pushing the latter coaxially to said bundle whilst progressively retracting said temporary receiving device (15).

4. Compacting device for carrying out a process according to any one of claims 1 to 3 for compacting a bundle of flexible, oblong objects of small transverse dimensions, such as fuel pencils for nuclear reactor, said objects constituting, prior to compacting, an assembly in which they occupy parallel, transversely spaced apart positions, characterized in that said device comprises a plurality of vertical guiding tubes (2) of which, on one side, the upper ends (2a) are disposed in register with the initial arrangement of the assembly of objects to be compacted and, on the other side, the lower ends (2b) are disposed in the desired arrangement, the dimensions of said guiding tubes (2) being such that one of said objects may slide in each of them, and in that, at their ends, the guiding tubes (2) are rendered fast with one another via transverse flanges (3, 6) pierced with holes (4, 7), distributed according to said arrangements.

5. Compacting device according to claim 4, characterized in that, beyond the most compact flange (6), it is extended by a plurality of convergent, rigid guiding elements (8) disposed so as, on the tube side, to face the interstices between the ends (2b) thereof, and, on the opposite side, to be in the interstices left free between said objects assembled in a bundle, and in that the guiding elements, at their end opposite the guiding tubes, reproduce the contour of the cross section of the bundle of objects at the spot where they have the desired arrangement.

6. Compacting installation for carrying out the process according to any one of claims 1 to 3 to compact a bundle of flexible, oblong objects of small transverse dimensions, such as fuel pencils for nuclear reactor, said objects constituting, prior to compacting, an assembly in which they occupy parallel, transversely spaced apart positions, characterized:

– in that it comprises a plurality of guiding tubes (2) oriented in a general vertical direction, of which the upper ends (2a) are disposed in register with the initial arrangement of said assembly of objects, and of which the lower ends (2b) are disposed in the desired arrangement, the dimensions of said guiding tubes (2) being such that one of said objects may slide in each of them, such sliding being promoted by the action of gravity,

– in that it comprises mechanical handling means for ensuring the relative displacement of the objects with respect to said guiding tubes (2); and

– in that it comprises an extensible and retractable device (15) adapted to maintain said assembly of objects in a bundle, this device temporarily receiving said objects before they are introduced into the second container (21).

**Patentansprüche für die Vertragsstaaten AT, BE, LU**

1. Verfahren zum Verdichten von aus länglichen, nachgiebigen Gegenständen geringer Querabmessung gebildeten Bündeln wie Brennstäbe von Kernreaktoren, wobei diese Gegenstände vor dem Verdichten eine Gesamtheit bilden, in der sie transversal von einander getrennt Parallelstellungen einnehmen, dadurch gekennzeichnet, dass im wesentlichen parallel zu einer allgemein gleichen Richtung mehrere Führungsröhren (2) eingesetzt werden, deren Enden (2a) an einer ersten Seite in Übereinstimmung mit der Ausgangsanordnung der Gesamtheit der Gegenstände und deren Enden (2b) an einer zweiten Seite nach der gewünschten Anordnung ausgelegt sind, wobei die Führungsröhren so bemessen sind, dass in jeder von ihnen einer der Gegenstände frei verschiebbar ist, dass ein Ende jedes Gegenstandes in eines der Enden (2a) an der ersten Seite der Führungsröhren (2) eingeführt wird und dass man die Gesamtheit der Gegenstände zu den Enden (2b) an der zweiten Seite der Führungsröhren gleiten lässt.

2. Verfahren nach Anspruch 1, dadurch gekennzeichnet, dass die allgemeine Führungseinrichtung senkrecht verläuft, dass die Gesamtheit der Gegenstände über die Vielzahl der Führungsröhren geführt wird und dass man nach dem Einführen der Gegenstände in die Röhren diese Gegenstände mit Hilfe der Einwirkung der Schwerkraft nach unten gleiten lässt.

3. Verfahren nach einem der Ansprüche 1 oder 2, dadurch gekennzeichnet, dass dem Führungsröhrenbündel (2) mehrere starre und zusammenlaufende Führungselemente nachgeschaltet sind, deren zu den Führungsröhren (2) weisenden Enden gegenüber den zwischen den Enden (2b) an der zweiten Seite der Führungsröhren befindlichen Lücken liegen und deren gegenüberliegende Enden sich in die zwischen den als Bündel bestehenden Gegenständen freigelassenen Lücken einfügen.

4. Verfahren nach einem der Ansprüche 1 bis 3 für den Fall, dass der zusammengehörende Satz der zur Bildung eines Gebundes bestimmten Gegenstände nur einen Teil der Gesamtheit der Gegenstände darstellt, dadurch gekennzeichnet, dass für den Teilsatz gleichzeitig verdichteter Gegenstände und demnach für die Einführungsenden der Führungsröhren eine Anordnung gewählt wird, die so ausgebildet ist, dass sie durch wenige einfache Relativbewegungen ohne Auslassung die Ausgangsordnung der Gesamtheit der Gegenstände abdecken kann.

5. Verfahren nach einem der Ansprüche 1 bis 4 in Anwendung auf die Einführung des Gegenstandsbündels in einen Behälter (21), dessen Querschnitt kaum grösser ist als der kleinste Querschnitt des Bündels, dadurch gekennzeichnet, dass der Vielzahl der Führungsröhren (2) und in deren Verlängerung eine Vorrichtung (15) zur vorläufigen Aufnahme der Gegenstände nachgeschaltet ist, die aus- und einfahrbar sowie in der Lage ist, die Gegenstände im Gebund zu halten, dass die Überführung des Gegenstandsbündels von der Vielzahl der Führungsröhren (2) an die Vorrichtung (15) fortschreitend betrieben wird, wobei die Vielzahl der Führungsröhren (2) hochgeführt und dabei die Vorrichtung (15) zur vorläufigen Aufnahme der Gegenstände ausgefahren wird, und dass darauf die Überführung des Gebunds der Gegenstände von der Vorrichtung (15) für die vorläufige Aufnahme zum Behälter (21) aufgenommen wird, indem dieser koaxial zum Gebund gedrückt und dabei die Vorrichtung (15) für die vorläufige Aufnahme fortschreitend zurückgezogen wird.

6. Verdichtungsvorrichtung zur Durchführung des in den Ansprüchen 1 bis 5 gekennzeichneten Verfahrens, wodurch ein Bündel aus länglichen, nachgiebigen Gegenständen geringer Querabmessung, wie Brennstäbe von Kernreaktoren, verdichtet wird, das aus den Gegenständen vor der Verdichtung eine Gesamtheit oder einen zusammengehörenden Satz bildet, in der bzw. dem die Gegenstände transversal voneinander getrennt Parallelstellungen einnehmen, dadurch gekennzeichnet, dass sie eine Vielzahl von Führungsröhren (2) aufweist, deren Enden (2a) an einer ersten Seite in Übereinstimmung mit der Ausgangsanordnung der zu verdichtenden Gesamtheit der Gegenstände und deren Enden (2b) an einer zweiten Seite nach der erwünschten Anordnung ausgelegt sind, wobei die Führungsröhren so bemessen sind, dass in jeder von ihnen einer der Gegenstände frei verschiebbar ist.

7. Verdichtungsvorrichtung nach Anspruch 6, dadurch gekennzeichnet, dass die Führungsröhren (2) an ihren Enden mittels Querflansche (3, 6) miteinander verbunden sind, in denen Löcher (4, 7) eingelassen sind, die nach den im Anspruch 6 bestimmten Anordnungen oder Auslegungen verteilt sind und die im Verhältnis zueinander beträchtliche Unterschiede aufweisen können.

8. Verdichtungsvorrichtung nach einem der Ansprüche 6 oder 7, dadurch gekennzeichnet, dass sie über den kompaktesten Flansch (6) hinaus durch eine Vielzahl von starren und zusammenlaufenden Führungselementen (8) verlängert ist, die derart angeordnet sind, dass sie auf der Seite der Röhren (2) den Lücken gegenüberliegen, die sich zwischen den Enden (2b) an deren zweiter Seite befinden, und dass sie auf der gegenüberliegenden Seite in den Lücken liegen, die zwischen den zu einem Bündel zusammengefassten Gegenständen freigelassen wurden, und dass die Führungselemente an ihrem den Führungsröhren gegenüberliegenden Enden an der Stelle, wo sie die erwünschte Anordnung einnehmen, die Kontur des Profilschnitts des Gegenstandsbündels wiedergeben.

9. Verdichtungsanlage zur Durchführung des in einem der Ansprüche 1 bis 5 angegebenen Verfahrens, wodurch ein Bündel aus länglichen, nachgiebigen Gegenständen geringer Querabmessung, wie Brennstäbe von Kernreaktoren, verdichtet wird, das vor der Verdichtung aus den Gegenständen eine Gesamtheit oder einen zusammengehörenden Satz bildet, in der bzw. dem die Gegenstände transversal voneinander getrennt Parallelstellungen einnehmen, gekennzeichnet durch eine Vielzahl von Führungsröhren (2), die in einer allgemein senkrecht verlaufenden Richtung ausgerichtet sind und deren obere Enden (2a) in Übereinstimmung mit der Ausgangsanordnung des Gegenstandsatzes und deren untere Enden (2b) der erwünschten Anordnung folgend ausgelegt sind, wobei die Führungsröhren (2) so bemessen sind, dass in ihnen einer der Gegenstände durch Schwerkrafteinwirkung verschiebbar ist, und durch mechanische Bedienungsmittel, durch die die relative Verschiebung der Gegenstände gegenüber den Führungsröhren gewährleistet wird.

10. Verdichtungsanlage nach Anspruch 9, gekennzeichnet durch eine ein- und ausfahrbare Vorrichtung (15), durch die die Gesamtheit der Gegenstände im Gebund gehalten werden kann und von der die Gegenstände vor deren Einführung in den zweiten Behälter (21) vorläufig aufgenommen werden.

**Patentansprüche für die Vertragsstaaten CH, DE, GB, LI, NL, SE**

1. Verfahren zum Verdichten eines aus länglichen, nachgiebigen Gegenständen geringer Querabmessung gebildeten Bündels wie Brennstäbe von Kernreaktoren, wobei diese Gegenstände vor dem Verdichten eine Gesamtheit bilden, in der sie transversal voneinander getrennt Parallelstellungen einnehmen, dadurch gekennzeichnet, dass im wesentlichen parallel zu einer allgemein gleichen Richtung mehrere Führungsröhren (2) eingesetzt werden, deren Enden (2a) an einer ersten Seite in Übereinstimmung mit der Ausgangsanordnung der Gesamtheit der Gegenstände und deren Enden (2b) an einer zweiten Seite nach der gewünschten Anordnung ausgelegt sind, wobei die Führungsröhren so bemessen sind, dass in jeder von ihnen einer der Gegenstände frei verschiebbar ist, dass die Gesamtheit der Gegenstände über die Vielzahl der Führungsröhren geführt wird, dass ein Ende jedes Gegenstandes in eines der oberen Enden der Führungsröhre (2) eingeführt wird, dass man die Gesamtheit der Gegenstände zu den unteren Enden (2b) der Führungsröhren unter Ausnutzung der Schwerkraft gleiten lässt und dass dem Führungsröhrenbündel (2) mehrere starre und zusammenlaufende Führungselemente (8) nachgeschaltet sind, deren zu den Führungsröhren (2) weisenden Enden gegenüber den zwischen den Enden (2b) der Führungsröhren (2) befindlichen Lücken liegen und deren gegenüberliegende Enden sich in die zwischen den als Bündel bestehenden Gegenständen freigelassenen Lücken einfügen.

2. Verfahren nach Anspruch 1 für den Fall, dass der zusammengehörende Satz der zur Bildung eines Gebunds bestimmten Gegenstände nur einen Teil der Gesamtheit der Gegenstände darstellt, dadurch gekennzeichnet, dass für den Teilsatz gleichzeitig verdichteter Gegenstände und demnach für die Einführungsenden der Führungsröhren eine Anordnung gewählt wird, die so ausgebildet ist, dass sie durch wenige einfache Relativbewegungen ohne Auslassung die Ausgangsanordnung der Gesamtheit der Gegenstände abdecken kann.

3. Verfahren nach einem der Ansprüche 1 oder 2 in Anwendung auf die Einführung des Gegenstandsbündels in einen Behälter (21), dessen Querschnitt kaum grösser ist als der kleinste Querschnitt des Bündels, dadurch gekennzeichnet, dass der Vielzahl der Führungsröhren (2) und in deren Verlängerung eine Vorrichtung (15) zur vorläufigen Aufnahme der Gegenstände nachgeschaltet ist, die aus- und einfahrbar sowie in der Lage ist, die Gegenstände im Gebund zu halten, dass die Überführung des Gegenstandsbündels von der Vielzahl der Führungsröhren (2) an die Vorrichtung (15) fortschreitend betrieben wird, wobei die Vielzahl der Führungsröhren (2) hochgeführt und dabei die Vorrichtung (15) zur vorläufigen Aufnahme der Gegenstände ausgefahren wird, und dass darauf die Überführung des Gebundes der Gegenstände von der Vorrichtung (15) für die vorläufige Aufnahme zum Behälter (21) aufgenommen wird, indem dieser koaxial zum Gebund gedrückt und dabei die Vorrichtung (15) für die vorläufige Aufnahme fortschreitend zurückgezogen wird.

4. Verdichtungsvorrichtung zur Durchführung des in den Ansprüchen 1 bis 3 beschriebenen Verfahrens, wodurch ein Bündel aus länglichen, nachgiebigen Gegenständen geringer Querabmessung, wie Brennstäbe von Kernreaktoren, verdichtet wird, das aus den Gegenständen vor der Verdichtung eine Gesamtheit oder einen zusammengehörenden Satz bildet, in der bzw. dem die Gegenstände transversal voneinander getrennt Parallelstellungen einnehmen, dadurch gekennzeichnet, dass sie eine Vielzahl von Führungsröhren (2) aufweist, deren an einer Seite liegende obere Enden (2a) in Übereinstimmung mit der Ausgangsanordnung der zu verdichtenden Gesamtheit der Gegenstände und deren an der anderen Seite liegende untere Enden (2b) nach der erwünschten Anordnung ausgelegt sind, wobei die Führungsröhren so bemessen sind, dass in jeder von ihnen einer der Gegenstände frei verschiebbar ist, und dass an ihren Enden die Führungsröhren (2) mittels Querflansche (3, 6) miteinander verbunden sind, in denen Löcher (4, 7) eingelassen sind, die eine nach den Anordnungen entsprechende Verteilung haben.

5. Vorrichtung nach Anspruch 4, dadurch gekennzeichnet, dass sie über den kompaktesten Flansch (6) hinaus durch eine Vielzahl von starren und zusammenlaufenden Führungselementen (8) verlängert ist, die derart angeordnet sind, dass sie auf der Seite der Röhren (2) den Lücken gegenüberliegen, die sich zwischen deren Enden befinden, und dass sie auf der gegenüberliegenden Seite in den Lücken liegen, die zwischen den zu einem Bündel zusammengefassten Gegenständen freigelassen werden, und dass die Führungselemente an ihrem den Führungsröhren gegenüberliegenden Ende an der Stelle, wo sie die erwünschte Anordnung einnehmen, die Kontur des Profilschnitts des Gegenstandsbündels wiedergeben.

6. Verdichtungsanlage zur Durchführung des in einem der Ansprüche 1 bis 3 angegebenen Verfahrens, wodurch ein Bündel aus länglichen, nachgiebigen Gegenständen geringer Querabmessung, wie Brennstäbe von Kernreaktoren, verdichtet wird, das vor der Verdichtung aus den Gegenständen eine Gesamtheit oder einen zusammengehörenden Satz bildet, in der bzw. dem die Gegenstände transversal voneinander getrennt Parallelstellungen einnehmen, gekennzeichnet durch eine Vielzahl von Führungsröhren (2), die in einer allgemein senkrecht verlaufenden Richtung ausgerichtet sind und deren obere Enden (2a) in Übereinstimmung mit der Ausgangsanordnung des Gegenstandsatzes und deren untere Enden (2b) der erwünschten Anordnung folgend ausgelegt sind, wobei die Führungsröhren (2) so bemessen sind, dass in ihnen einer der Gegenstände durch Schwerkrafteinwirkung verschiebbar ist, durch mechanische Bedienungsmittel, durch die die relative Verschiebung der Gegenstände gegenüber den Führungsröhren gewährleistet wird, und durch eine ein- und auffahrbare Vorrichtung (15), durch die die Gesamtheit der Gegenstände im Gebund gehalten werden kann und von der die Gegenstände vor deren Einführung in den zweiten Behälter (21) vorläufig aufgenommen werden.

0110946

Fig.1

Fig. 2

Fig.3

13

*Fig:4*

*Fig:5*

0110946

Fig.6    Fig.7

17

0110946

*Fig.8*   *Fig.9*

19